# EUROPÄISCHE PATENTSCHRIFT

(11) **EP 2 615 223 B1**
(45) Veröffentlichungstag und Bekanntmachung des Hinweises auf die Patenterteilung: **17.05.2017**
(21) Anmeldenummer: 13000138.1
(22) Anmeldetag: 11.01.2013
(51) Int. Cl.: F16B 7/04, E04F 19/06

(54) **Vorrichtung zum Abdecken von Belagsrändem**
Device for covering the edges of coatings
Dispositif de recouvrement de bords de revêtements

(30) Priorität: 13.01.2012 DE 202012000303 U
(43) Veröffentlichungstag der Anmeldung: 17.07.2013
(73) Patentinhaber: Küberit Profile Systems GmbH & Co. KG, 58513 Lüdenscheid (DE)
(72) Erfinder: Sondermann, Frank, 57489 Drolshagen (DE)
(74) Vertreter: Witzany, Manfred

(56) Entgegenhaltungen:
- EP-A1- 0 510 216
- EP-A1- 2 360 381
- FR-A1- 2 408 750

## Beschreibung

Die Erfindung betrifft eine Vorrichtung zum Abdecken von Belagsrändern gemäß dem Oberbegriff des Patentanspruchs 1.

Aus der DE 20 2008 000 534 U1 ist eine Vorrichtung zum Abdecken von zwei parallelen Belagsrändern bekannt. Diese besteht aus Profilschienen, welche an Halteelementen gehalten sind. Die Profilschienen weisen Abdeckflügel auf, welche die Belagsränder jeweils übergreifen. Außerdem sind an den Profilschienen vertikal nach unten gerichtete Stege vorgesehen, die das Halteelement umgreifen. Diese bekannte Vorrichtung hat sich in der Praxis gut bewährt und bildet den Ausgangspunkt der vorliegenden Erfindung.

Aus der EP 0 510 216 A1 ist eine Vorrichtung zum Abdecken von Belagsrändern bekannt. Diese Vorrichtung weist zwei Profilschienen auf, die einen Belagsrand mit einem Abdeckflügel übergreifen. Außerdem weist diese Vorrichtung einen Steg auf. Eine der Profilschienen weist eine spitzwinkelig zur ihrer Längserstreckung ausgerichtete Stirnfläche auf. Diese Vorrichtung hat sich in der Praxis bewährt und bildet den Ausgangspunkt der vorliegenden Erfindung.

Der Erfindung liegt die Aufgabe zugrunde, eine Vorrichtung der eingangs genannten Art zu schaffen, die dem Verleger eine größere Gestaltungsfreiheit bietet.

Diese Aufgabe wird erfindungsgemäß mit den Merkmalen des Patentanspruchs 1 gelöst.

Die Vorrichtung gemäß Anspruch 1 dient zum Abdecken von Belagsrändern. Die Vorrichtung weist mindestens zwei Profilschienen und mindestens ein Halteelement auf. Die Profilschienen weisen jeweils mindestens einen Abdeckflügel auf, der den jeweiligen Belagsrand übergreift. Außerdem ist an den Profilschienen mindestens ein Steg vorgesehen. Um auch spitzwinkelig aneinander stoßende Belagsränder mit dieser Vorrichtung einfach und ohne großen Montageaufwand abdecken zu können, weist wenigstens eine dieser Profilschienen mindestens eine spitzwinkelig zu ihrer Längserstreckung ausgerichtete Stirnfläche auf. An diese Stirnfläche stößt wenigstens eine andere der Profilschienen, so dass diese Profilschienen eine winkelige Anordnung ergeben. Zur Erleichterung der Montage dieser Vorrichtung weist das Halteelement wenigstens zwei winkelig zueinander ausgerichtete Schenkel auf, die jeweils mindestens einen der Stege der Profilschiene erfassen. Dieses Halteelement hält die Profilschienen in winkeliger Lage aneinander, so dass die Profilschienen einfach in dieser zusammengesetzten Kombination montiert werden können. Vorzugsweise sind die Stirnflächen der Profilschienen jeweils in einem Winkel von 45° zur Längserstreckung der jeweiligen Profilschiene angestellt, so dass die Profilschienen in einem rechten Winkel zueinander ausgerichtet sind. Damit können rechtwinkelige Belagsränder auf einfache Weise und sauber abgedeckt werden. Der Erfindungsgegenstand ist jedoch nicht auf diesen Winkel eingeschränkt. Außerdem ist daran gedacht, an wenigstens einer der Profilschienen zwei winkelig angestellte Stirnflächen vorzusehen. Damit können die Profilschienen in T- oder Kreuzform ausgebildet sein, um beispielsweise sich kreuzende Dehnungsfugen von großen Belägen zu überdecken. Insbesondere auf Ausstellungen hat diese Anordnung den Vorteil, dass auf relativ kleiner Fläche vier unterschiedliche Belagsarten unmittelbar nebeneinander gezeigt werden können, was den Platzbedarf auf einer Ausstellung erheblich reduziert. Die Stege der Profilschienen sind im Bereich des Halteelements plastisch verformt. Vorzugsweise werden die Stege derart verformt, dass sich der Aufnahmeraum unter dem Halteelement verjüngt, was ein Verlieren des Halteelements ausschließt. Außerdem drücken sich in diesem Fall die Stege noch enger an das Halteelement an, was den Reibschluss verbessert. Durch Nocken im Halteelement kann auf diese Weise auch eine formschlüssige Verbindung in Längsrichtung der Profilschienen realisiert werden.

Eine einfache Verbindung des Halteelements mit den Profilschienen ergibt sich durch reibschlüssiges Halten des Halteelements an den Stegen gemäß Anspruch 2. Das Halteelement muss lediglich in den Aufnahmeraum zwischen den Stegen der Profilschienen eingedrückt werden, um ein sicheres Halten der Profilschienen aneinander zu gewährleisten. Vorzugsweise ragen die Profilschienen über das Halteelement hinaus, so dass in diesem Bereich die Profilschienen in bekannter Weise an einer entsprechenden Basisschiene festgelegt werden können. Diese Basisschiene übernimmt dann in der montierten Lage die Haltefunktion für die Profilschiene, so dass das Halteelement nur während des Einbaus der Vorrichtung benötigt wird. Damit reicht die Haltewirkung einer reibschlüssigen Verbindung aus.

Alternativ oder zusätzlich kann die Verbindung zwischen dem Halteelement und den Stegen der Profilschienen gemäß Anspruch 3 formschlüssig ausgebildet sein. Um die Profilschienen trotzdem leicht herstellen zu können, wird diese formschlüssige Verbindung vorzugsweise auf Kraftrichtungen senkrecht zum Abdeckflügel, also in Stegrichtung beschränkt. Auf diese Weise verbessert sich die Haltewirkung des Halteelements.

Eine einfache Realisierung einer formschlüssigen Verbindung ergibt sich gemäß Anspruch 4 durch Vorsehen eines zum Aufnahmeraum gerichteten Vorsprungs an den Stegen. Es spielt dabei keine Rolle, ob einer oder mehrere Stege diesen Vorsprung aufweisen. Dieser Vorsprung verhindert eine Bewegung des Halteelements senkrecht zum Belag mit sehr hoher Zuverlässigkeit, was die Montage der Vorrichtung erleichtert.

Zur Erzielung einer guten kraftschlüssigen Verbindung ist es gemäß Anspruch 5 günstig, wenn das Halteelement bzw. mindestens einer der Stege elastisch verformbar ausgebildet ist. Damit ergibt sich auch beim Verbiegen der Vorrichtung während des Einbaus eine ausreichende Kraftreserve, um die kraftschlüssige Verbindung aufrechtzuerhalten. Elastisch verformbare Stege können beispielsweise durch entsprechende Materialauswahl der Profilschiene erzielt werden. Vorzugsweise bestehen die Profilschienen aus einem Polymer oder einem Metall wie beispielsweise Aluminium. Die Elastizität der Stege kann noch weiter durch Sollbiegestellen in Form von Querschnittsverjüngungen an den Stegen erhöht werden. Ein elastisch verformbares Halteelement kann ebenfalls durch entsprechende Materialauswahl wie bei den Profilschienen realisiert werden, wobei hier bevorzugt Elastomere eingesetzt werden. Alternativ oder zusätzlich kann das Halteelement auch Haltenocken in Form von zu den Stegen gerichteten Vorsprüngen aufweisen, die die Anlagefläche reduzieren und damit den Anpressdruck entsprechend erhöhen.

Gemäß Anspruch 5 ist es vorteilhaft, wenn die Stege im Bereich des Halteelements zu deren freien Enden hin konvergieren. Auf diese Weise ist auch ohne Vorsprung an den Stegen eine Bewegung des Halteelements relativ zu den Profilschienen senkrecht zur Belagsebene ausgeschlossen. Die Stege können dabei auf ihrer gesamten Längserstreckung konvergent ausgebildet sein. Alternativ kann diese Konvergenz auch auf den Bereich um das Halteelement beschränkt sein, was vorzugsweise dann durch eine entsprechende plastische Verformung der Stege realisiert wird.

Außerdem ist es gemäß Anspruch 6 günstig, wenn die Profilschienen extrudiert sind. Profilschienen weisen dann einen über ihre gesamte Längserstreckung konstanten Querschnitt auf, wobei die Herstellung der Profilschienen besonders einfach und damit kostengünstig ist. Insbesondere ist eine Herstellung in einem kontinuierlichen Endlosverfahren möglich. Änderungen des Querschnitts im Bereich des Halteelements werden in diesem Fall ausschließlich durch plastische Verformung realisiert.

Grundsätzlich reicht ein Steg der Profilschienen aus, um das Halteelement sicher zu halten. In diesem Fall sollte jeder Schenkel des Halteelements mindestens eine Nut aufweisen, in die der Steg der Profilschiene eingreifen kann. Auf diese Weise ist eine sichere Verbindung zwischen dem Halteelement einerseits und der Profilschiene andererseits realisierbar. Besitzt der Steg einen konstanten oder zu seinem freien Ende hin verjüngenden Querschnitt, so kann auf diese Weise eine kraftschlüssige Verbindung realisiert werden. Bei Anwendung eines hinterschnittenen Steges ist auch problemlos eine formschlüssige Verbindung möglich. Die Montage vereinfacht sich jedoch erheblich, wenn gemäß Anspruch 7 die Profilschienen jeweils mindestens zwei Stege aufweisen. Zwischen diesen Stegen ist ein Aufnahmeraum vorgesehen, in den jeweils ein Schenkel des Halteelements greift. Damit kann das Halteelement besonders einfach gebaut werden, was die Herstellungskosten entsprechend reduziert.

Der Erfindungsgegenstand wird beispielhaft anhand der Zeichnung erläutert, ohne den Schutzumfang zu beschränken.

Es zeigt:
- Figur 1: eine räumliche Explosionsdarstellung einer ersten Ausführungsform einer Vorrichtung zum Abdecken von Belagsrändern in umgedrehter Lage,
- Figur 2: eine räumliche Explosionsdarstellung einer zweiten Ausführungsform der Vorrichtung gemäß Figur 1,
- Figur 3: eine räumliche Explosionsdarstellung einer dritten Ausführungsform der Vorrichtung gemäß Figur 1 und
- Figur 4: eine räumliche Darstellung einer Vorrichtung gemäß Figur 3 in montierter Lage des Halteelements.

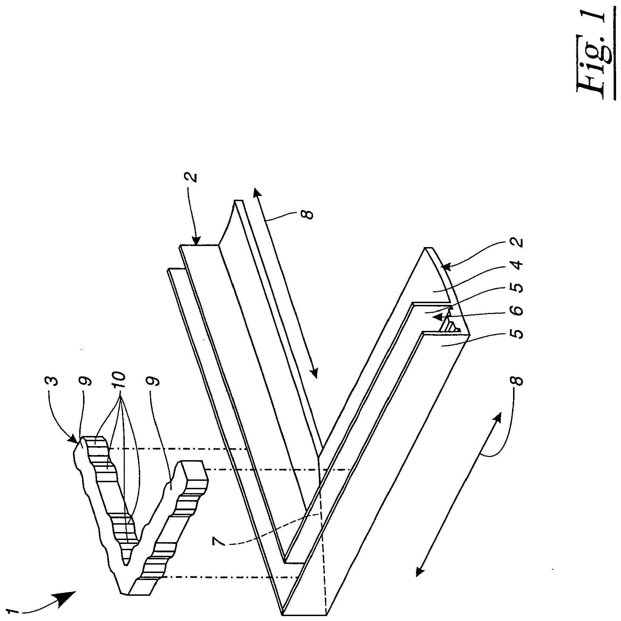

Eine Vorrichtung 1 gemäß Figur 1 weist zwei Profilschienen 2 und ein Halteelement 3 auf. Die Profilschienen 2 weisen jeweils einen Abdeckflügel 4 auf, der einen nicht dargestellten Bodenbelagsrand überdecken kann und damit als Randabschluss dient. Außerdem besitzen die Profilschienen 2 jeweils zwei Stege 5, die im Wesentlichen senkrecht zum Abdeckflügel 4 ausgerichtet sind. Dieser Winkel ist jedoch nicht zwingend erforderlich und kann insbesondere je nach gewünschtem Design auch entsprechend abgeändert werden. In montierter Lage sind die Stege 5 zum Belag gerichtet und damit nicht sichtbar.

Die Stege 5 schließen einen Aufnahmeraum 6 zwischen sich ein, in den beispielsweise eine nicht dargestellte Basisschiene greifen kann, die in montierter Lage die Profilschiene 2 arretiert.

Die beiden Profilschienen 2 weisen jeweils eine Stirnfläche 7 auf, die zu einer Längserstreckung 8 der Profilschiene 2 spitzwinkelig angeordnet ist. Im vorliegenden Ausführungsbeispiel gemäß Figur 1 schließt die Stirnfläche 7 mit der Längserstreckung 8 der Profilschiene 2 einen Winkel von 45° ein. Auch dieser Winkel ist jedoch nicht beschränkend zu sehen, so dass auch jegliche anderen von 90° abweichenden Winkel möglich sind. Die beiden Stirnflächen 7 stoßen aneinander, so dass die beiden Profilschienen 2 winkelig zueinander ausgerichtet sind. Im vorliegenden Ausführungsbeispiel gemäß Figur 1 schließen die Längserstreckungen 8 der beiden Profilschienen 2 einen Winkel von 90° zueinander ein, was bei Raumecken relativ häufig benötigt wird. Damit ergibt sich eine einfache Eckabdeckung des Belages.

Für einen vorteilhaften optischen Eindruck der Belagsrandabdeckung ist es wichtig, dass die Stirnkanten 7 satt aufeinander aufliegen und in diesem Bereich insbesondere kein Spalt entsteht. Werden die beiden Profilschienen 2 einzeln verarbeitet, ist diese Bedingung relativ schwierig einzuhalten, was auf der Baustelle zu entsprechenden Problemen führt. Zur Vermeidung dieser Probleme ist das Halteelement 3 in die beiden Aufnahmeräume 6 der Profilschienen 2 eingeführt. Das Halteelement 3 ist L-förmig ausgebildet und weist zu diesem Zweck zwei Schenkel 9 auf, deren Querschnitt an die Aufnahmeräume 6 angepasst ist. Die Schenkel 9 schließen zueinander einen Winkel ein, der dem Winkel zwischen den Längserstreckungen 8 der Profilschienen 2 entspricht.

Zur Erzielung einer guten reibschlüssigen Verbindung zwischen dem Halteelement 3 und den Profilschienen 2 weist das Halteelement 3 Nocken 10 in Form von Vorsprüngen auf, die gegen die Stege 5 drücken. Damit hält das Halteelement 3 die beiden Profilschienen 2 kraftschlüssig zusammen, was die Montage der Vorrichtung 1 entsprechend vereinfacht. In der Regel muss dieser Zusammenhalt nur während des Einbaus sichergestellt werden. In montierter Lage werden die Profilschienen 2 von entsprechenden, nicht dargestellten Basisschienen gehalten, die dann auch die gewünschte Festigkeit realisieren.

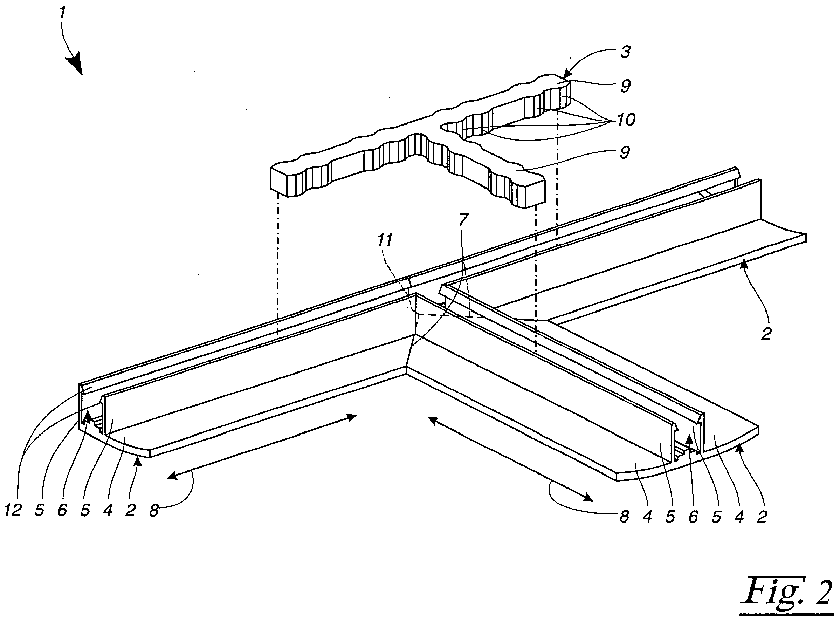

Die Figur 2 zeigt eine alternative Ausführungsform der Vorrichtung 1 gemäß Figur 1, wobei gleiche Bezugszeichen gleiche Teile benennen. Zur Vereinfachung wird nur auf die Unterschiede zur Figur 1 eingegangen.

Die Vorrichtung 1 gemäß Figur 2 weist drei T-förmig angeordnete Profilschienen 2 auf. Zum Halten der Profilschienen 2 aneinander ist das Halteelement 3 T-förmig ausgebildet. Es weist im Gegensatz zur Ausführungsform gemäß Figur 1 drei Schenkel 9 auf, die jeweils in gleicher Weise wie bei der Ausführungsform in Figur 1 ausgebildet sind.

Die drei Profilschienen 2 weisen jeweils zwei Stirnflächen 7, 11 auf, an denen sie aneinander stoßen. Die Stirnflächen 7 sind wiederum spitzwinkelig zur Längserstreckung 8 der Profilschienen 2 angestellt, während die Stirnflächen 11 senkrecht zur Längserstreckung 8 ausgerichtet sind. Je nach Einbausituation können diese Winkel auch in beliebiger Weise abgeändert werden. Beispielsweise könnten die Stirnflächen 7, 11 auch jeweils zu den Längserstreckungen 8 der Profilschienen 2 einen Winkel von 60° einschließen, um mit den Profilschienen 2 eine wabenartige Struktur zu realisieren. Bei den gewählten Winkeln sind die beiden hinteren Profilschienen 2 fluchtend zueinander ausgerichtet, während die vordere Profilschiene 2 zu den beiden erstgenannten einen Winkel von 90° einschließt. Die Profilschienen 2 ergeben daher eine T-Form, die insbesondere im Randbereich von sehr großen Flächen mit Zwischendehnungsfugen benötigt wird. Im Unterschied zur Ausführungsform gemäß Figur 1 weist die nach vorne gerichtete Profilschiene 2 zwei Abdeckflügel 4 auf, um beide Belagsränder der Zwischendehnungsfuge zu überdecken.

Alternativ zur dargestellten Ausführungsform können die beiden hinteren Profilschienen 2 auch einstückig ausgebildet sein, so dass die Stirnflächen 11 entfallen. In diesem Fall wird die hintere Profilschiene 2 zur Bildung der beiden Stirnflächen 7 V-förmig eingeschnitten.

Im Gegensatz zur Ausführungsform gemäß Figur 1 weisen die Stege 5 nach innen gerichtete Vorsprünge 12 auf. Diese Vorsprünge 12 verhindern, dass sich das Halteelement 3 von den Stegen 5 löst und die Haltewirkung der Profilschienen 2 verloren geht. Die Vorsprünge 12 sind lediglich beispielhaft als Rastvorsprünge mit Einführschrägen dargestellt. Dies ermöglicht eine einfache Montage des Halteelements 3 im Aufnahmeraum 6 durch Eindrücken. Andere Formen für den Vorsprung 12 sind jedoch ebenfalls realisierbar.

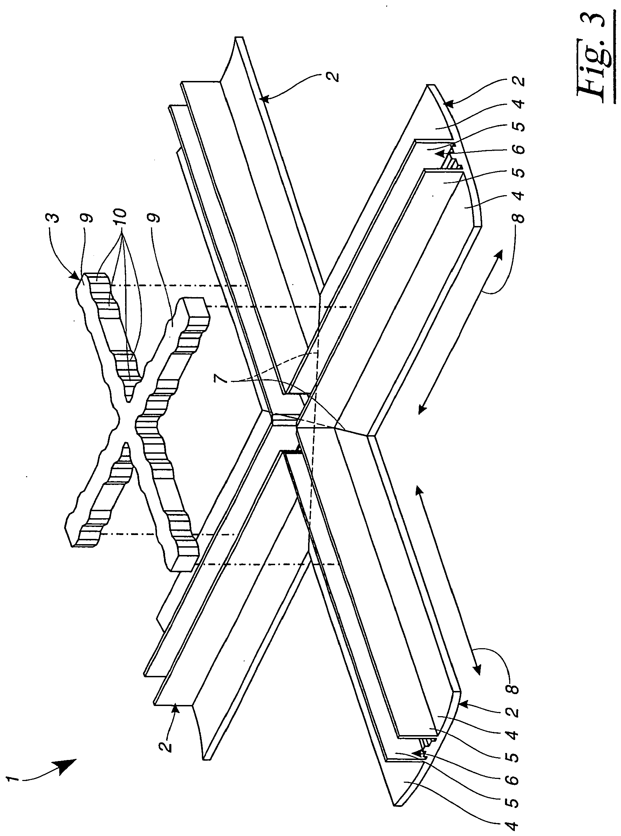

Die Figur 3 zeigt eine weitere alternative Ausführungsform der Vorrichtung 1 gemäß Figur 1, wobei wiederum gleiche Bezugszeichen gleiche Teile benennen. Im Folgenden wird nur auf die Unterschiede zur Ausführungsform gemäß Figur 1 eingegangen.

Die Vorrichtung 1 gemäß Figur 3 weist vier Profilschienen 2 auf, die jeweils zwei pfeilförmig ausgerichtete Stirnflächen 7 aufweisen. Diese Stirnflächen 7 schließen mit der Längserstreckung 8 der jeweiligen Profilschiene 2 jeweils einen Winkel von 45° ein, so dass die beiden Stirnflächen 7 jeder Profilschiene 2 zueinander einen Winkel von 90° bilden. Auch diese Winkel sind je nach Anwendungsfall wieder frei wählbar. Die vier Profilschienen 2 bilden zusammengesetzt ein Kreuz, welches insbesondere zur Abdeckung von sich kreuzenden Zwischendehnungsfugen gedacht ist. Entsprechend ist auch das Halteelement 3 kreuzförmig ausgebildet, um in die Aufnahmeräume 6 der vier Profilschienen 2 zu greifen.

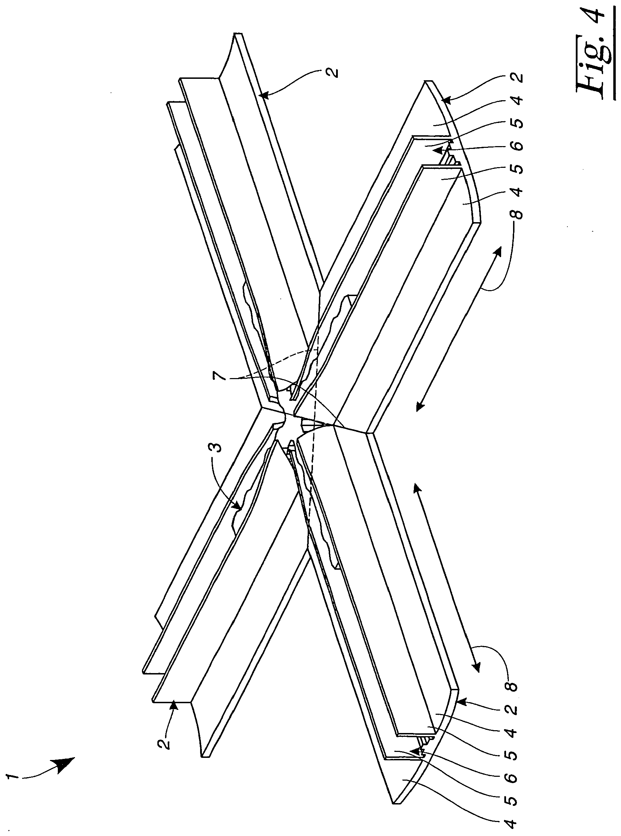

Bei der Ausführungsform gemäß Figur 4 sind alle Profilschienen 2 mit zwei Abdeckflügeln 4 ausgebildet, um die beiden gegenüberliegenden Belagskanten zu überdecken.

Die Figur 4 zeigt die Vorrichtung 1 gemäß Figur 3 in montierter Lage. Dabei ist das Halteelement 3 in die Aufnahmeräume 6 der Profilschienen 2 eingesetzt. Um die Profilschienen 2 sicher zu halten, sind die Stege 5 im Bereich der Schenkel 9 des Halteelements 3 zueinander gebogen. Damit ergibt sich eine in alle Richtungen formschlüssige Verbindungen zwischen dem Halteelement 3 und den Profilschienen 2.

Die dargestellten und beschriebenen Ausführungsformen stellen lediglich Beispiele des Erfindungsgegenstandes dar, und sind nicht schutzbeschränkend. Insbesondere ist auch an jegliche unterschiedliche Kombination der Ausführungsbeispiele untereinander gedacht. Ausführungsformen mit nur einem Abdeckflügel 4 dienen insbesondere als Randabschluss des Belages, während solche mit zwei Abdeckflügeln 4 zum Übergreifen von Dehnungsfugen vorgesehen sind. Auch die Längen der einzelnen Profilschienen 2 sind beliebig wählbar und können insbesondere von den Darstellungen in den Ausführungsbeispielen erheblich abweichen.

### Bezugszeichenliste

- 1: Vorrichtung
- 2: Profilschiene
- 3: Halteelement
- 4: Abdeckflügel
- 5: Steg
- 6: Aufnahmeraum
- 7: Stirnfläche
- 8: Längserstreckung
- 9: Schenkel
- 10: Nocke
- 11: Stirnfläche
- 12: Vorsprung

## Patentansprüche

1. Vorrichtung zum Abdecken von Belagsrändern, wobei die Vorrichtung (1) mindestens zwei Profilschienen (2) aufweist, wobei die Profilschienen (2) mindestens einen den Belagsrand übergreifenden Abdeckflügel (4) und mindestens einen Steg (5) aufweisen und mindestens eine der Profilschienen (2) mindestens eine spitzwinkelig zu ihrer Längserstreckung (8) ausgerichtete Stirnfläche (7) aufweist, **dadurch gekennzeichnet, dass** die Vorrichtung (1) mindestens ein Halteelement (3) aufweist, welches wenigstens zwei winkelig zueinander ausgerichtete Schenkel (9) aufweist, welche jeweils mindestens einen der Stege (5) der Profilschienen (2) erfassen, um die Profilschienen (2) in winkeliger Lage aneinander zu halten, wobei mindestens einer der Stege (5) im Bereich des Halteelements (3) plastisch verformt ist, um sich noch enger an das Halteelement zu drücken.

2. Vorrichtung nach Anspruch 1, **dadurch gekennzeichnet, dass** das Halteelement (3) reibschlüssig mit den Stegen (5) verbunden ist.

3. Vorrichtung nach Anspruch 1 oder 2, **dadurch gekennzeichnet, dass** das Halteelement (3) zumindest senkrecht zum Abdeckflügel (4) formschlüssig mit den Stegen (5) verbunden ist.

4. Vorrichtung nach Anspruch 3, **dadurch gekennzeichnet, dass** die Stege (5) mindestens einen zum Aufnahmeraum (6) gerichteten Vorsprung (12) aufweisen.

5. Vorrichtung nach mindestens einem der Ansprüche 1 bis 4, **dadurch gekennzeichnet, dass** das mindestens eine Halteelement (3) und/oder mindestens einer der Stege (5) elastisch verformbar ausgebildet ist.

6. Vorrichtung nach mindestens einem der Ansprüche 1 bis 5, **dadurch gekennzeichnet, dass** die Stege (5) im Bereich des Halteelements (3) zu deren freien Enden hin konvergieren.

7. Vorrichtung nach mindestens einem der Ansprüche 1 bis 6, **dadurch gekennzeichnet, dass** die Profilschienen (2) extrudiert sind.

8. Vorrichtung nach mindestens einem der Ansprüche 1 bis 7, **dadurch gekennzeichnet, dass** die Profilschienen (2) wenigstens zwei der Stege (5) aufweisen, die zwischen sich mindestens einen Aufnahmeraum (6) einschließen, in den jeweils einer der Schenkel (9) des Halteelements (3) greift.

## Claims

1. Device for concealing the edges of coverings, wherein the device (1) has at least two profiled rails (2), wherein the profiled rails (2) have at least one concealing wing (4), which engages over the edge of the covering, and at least one web (5), and at least one of the profiled rails (2) has at least one end face (7) which is oriented at an acute angle to its longitudinal extent (8), **characterized in that** the device (1) has at least one retaining element (3) which has at least two legs (9) which are oriented at an angle to one another, each of said legs seizing at least one of the webs (5) of the profiled rails (2) in order to hold the profiled rails (2) against one another in an angled position, wherein at least one of the webs (5) is plastically deformed in the region of the retaining element (3) so as to be pressed tighter still against the retaining element.

2. Device according to Claim 1, **characterized in that** the retaining element (3) is frictionally connected to the webs (5).

3. Device according to Claim 1 or 2, **characterized in that** the retaining element (3) is positively connected to the webs (5) at least perpendicularly to the concealing wing (4).

4. Device according to Claim 3, **characterized in that** the webs (5) have at least one projection (12) which is directed towards the receiving space (6).

5. Device according to at least one of Claims 1 to 4, **characterized in that** the at least one retaining element (3) and/or at least one of the webs (5) are/is designed to be elastically deformable.

6. Device according to at least one of Claims 1 to 5, **characterized in that** the webs (5) converge towards their free ends in the region of the retaining element (3).

7. Device according to at least one of Claims 1 to 6, **characterized in that** the profiled rails (2) are extruded.

8. Device according to at least one of Claims 1 to 7, **characterized in that** the profiled rails (2) have at least two of the webs (5) which enclose between them at least one receiving space (6) in which there respectively engages one of the legs (9) of the retaining element (3).

## Revendications

1. Dispositif de recouvrement de bords de revêtement, le dispositif (1) présentant au moins deux rails profilés (2), les rails profilés (2) présentant au moins une aile de recouvrement (4) s'engageant par le dessus avec le bord de revêtement et au moins une nervure (5), et au moins l'un des rails profilés (2) présentant au moins une surface frontale (7) orientée suivant un angle aigu par rapport à son étendue longitudinale (8), **caractérisé en ce que** le dispositif (1) présente au moins un élément de retenue (3) qui présente au moins deux branches (9) orientées suivant un certain angle l'une par rapport à l'autre, qui saisissent à chaque fois au moins l'une des nervures (5) des rails profilés (2) afin de retenir les rails profilés (2) dans une position inclinée l'un contre l'autre, au moins l'une des nervures (5) étant déformée plastiquement dans la région de l'élément de retenue (3) afin de se presser encore plus étroitement contre l'élément de retenue.

2. Dispositif selon la revendication 1, **caractérisé en ce que** l'élément de retenue (3) est connecté par engagement par friction aux nervures (5).

3. Dispositif selon la revendication 1 ou 2, **caractérisé en ce que** l'élément de retenue (3) est connecté au moins perpendiculairement à l'aile de recouvrement (4) par engagement par correspondance de formes avec les nervures (5).

4. Dispositif selon la revendication 3, **caractérisé en ce que** les nervures (5) présentent au moins une saillie (12) orientée vers l'espace de réception (6).

5. Dispositif selon au moins l'une quelconque des revendications 1 à 4, **caractérisé en ce que** l'au moins un élément de retenue (3) et/ou au moins l'une des nervures (5) sont réalisés de manière déformable élastiquement.

6. Dispositif selon au moins l'une quelconque des revendications 1 à 5, **caractérisé en ce que** les nervures (5), dans la région de l'élément de retenue (3), convergent vers ses extrémités libres.

7. Dispositif selon au moins l'une quelconque des revendications 1 à 6, **caractérisé en ce que** les rails profilés (2) sont extrudés.

8. Dispositif selon au moins l'une quelconque des revendications 1 à 7, **caractérisé en ce que** les rails profilés (2) présentent au moins deux des nervures (5) qui forment entre elles au moins un espace de réception (6) dans lequel s'engage à chaque fois l'une des branches (9) de l'élément de retenue (3).
